# EUROPÄISCHE PATENTANMELDUNG

(11) **EP 4 418 062 A1**
(43) Veröffentlichungstag der Anmeldung: **21.08.2024**
(21) Anmeldenummer: 24154265.3
(22) Anmeldetag: 26.01.2024
(51) Int. Cl.: G05B 23/02

(54) **VERFAHREN UND VORRICHTUNG ZUR ERKENNUNG EINES FEHLERZUSTANDES EINER MASCHINE ODER EINES PROZESSES**

(30) Priorität: 17.02.2023 DE 102023104044
(71) Anmelder: Hüttlin GmbH, 79650 Schopfheim (DE)
(72) Erfinder: Michaelis, Marc, 79539 Lörrach (DE); Paasche, Christian Karl, 79713 Bad Säckingen (DE); Manz, Stefan, 73266 Bissingen an der Teck (DE)
(74) Vertreter: DREISS Patentanwälte PartG mbB

(57) **Zusammenfassung**

Verfahren und Vorrichtung (100) zur Erkennung eines Fehlerzustandes einer Maschine (102) oder eines Prozesses, wobei die Vorrichtung (100) ausgebildet ist, Ist-Werte von Parametern des Prozesses an der Maschine (102)zur Durchführung des Prozesses zu erfassen, wobei die Parameter wenigstens einen regelbaren Prozessparameter (204) des Prozesses, wenigstens einen nicht regelbaren Prozessparameter (206) des Prozesses oder wenigstens einen Regelparameter (202) zum Regeln des oder eines anderen regelbaren Prozessparameters (204) im Prozess umfassen, wobei die Vorrichtung (100) ausgebildet ist, eine Soll-Korrelation für Ist-Werte von wenigstens zwei der Parameter vorzugeben, eine Ist-Korrelation abhängig von den IstWerten der wenigstens zwei der Parameter zu bestimmen, und abhängig von der Ist-Korrelation und der Soll-Korrelation einen Fehlerzustand der Maschine (102) oder des Prozesses zu erkennen.

## Beschreibung

Die Erfindung betrifft ein Verfahren und eine Vorrichtung zur Erkennung eines Fehlerzustandes einer Maschine oder eines Prozesses.

Durch die Vorrichtung und das Verfahren nach den unabhängigen Ansprüchen wird eine Erkennung von Fehlern im Prozess oder in der Maschine ermöglicht.

Die Vorrichtung zur Erkennung eines Fehlerzustandes einer Maschine oder eines Prozesses ist ausgebildet, Ist-Werte von Parametern des Prozesses an der Maschine zur Durchführung des Prozesses zu erfassen, wobei die Parameter wenigstens einen regelbaren Prozessparameter des Prozesses, wenigstens einen nicht regelbaren Prozessparameter des Prozesses oder wenigstens einen Regelparameter zum Regeln des oder eines anderen regelbaren Prozessparameters im Prozess umfassen, wobei die Vorrichtung ausgebildet ist, eine Soll-Korrelation für Ist-Werte von wenigstens zwei der Parameter vorzugeben, eine Ist-Korrelation abhängig von den Ist-Werten der wenigstens zwei der Parameter zu bestimmen, und abhängig von der Ist-Korrelation und der Soll-Korrelation einen Fehlerzustand der Maschine oder des Prozesses zu erkennen.

Die Vorrichtung ist vorzugsweise ausgebildet, abhängig von der Soll-Korrelation einen Korridor für die Ist-Korrelation vorzugeben, zu erkennen, dass die Ist-Korrelation außerhalb des Korridors liegt, und den Fehlerzustand zu erkennen, wenn die Ist-Korrelation außerhalb des Korridors liegt.

Es kann vorgesehen sein, dass die Soll-Korrelation einen Mittelwert einer Verteilung definiert, wobei die Vorrichtung ausgebildet ist, eine Standardabweichung für die Verteilung vorzugeben, und den Korridor abhängig vom Mittelwert und der Standardabweichung vorzugeben.

Die Vorrichtung ist vorzugsweise ausgebildet, die Ist-Korrelation abhängig von den Ist-Werten von zwei der Parameter zu bestimmen.

Es kann vorgesehen sein, dass die Vorrichtung ausgebildet ist, die Ist-Korrelation und den Korridor für unterschiedliche Paare der Parameter zu bestimmen und den Fehlerzustand zu erkennen, wenn die Ist-Korrelation wenigstens eines Paares der unterschiedlichen Paare von dem diesem Paar zugeordneten Korridor abweicht.

Es kann vorgesehen sein, dass die Vorrichtung ausgebildet ist, die Ist-Korrelation abhängig von den Ist-Werten von wenigstens drei der Parameter zu bestimmen.

Es kann vorgesehen sein, dass die Vorrichtung ausgebildet ist, die Ist-Korrelation und den Korridor für mehrere Gruppen von Parametern, die unterschiedliche der wenigstens drei der Parameter umfassen, zu bestimmen, und den Fehlerzustand zu erkennen, wenn die Ist-Korrelation wenigstens einer der Gruppen von dem dieser Gruppe zugeordneten Korridor abweicht.

Vorzugsweise ist die Vorrichtung ausgebildet, wenigstens einen weiteren Parameter zur Durchführung eines weiteren Prozesses zu erfassen, wobei der weitere Parameter wenigstens einen regelbaren Prozessparameter des weiteren Prozesses, wenigstens einen nicht regelbaren Prozessparameter des weiteren Prozesses oder wenigstens einen Regelparameter zum Regeln des oder eines regelbaren Prozessparameters im weiteren Prozess umfasst, wobei die Vorrichtung ausgebildet ist, die Ist-Korrelation abhängig vom weiteren Parameter zu bestimmen.

Vorzugsweise ist die Vorrichtung ausgebildet, einen zeitlichen Verlauf der Parameter zu erfassen, und die Ist-Korrelation abhängig vom zeitlichen Verlauf der Parameter zu bestimmen.

Es kann vorgesehen sein, dass die Maschine zur Wirbelschichttrocknung oder Tablettenbeschichtung ausgebildet ist, wobei einer der regelbaren Parameter eine Zulufttemperatur umfasst, wobei einer der Regelparameter eine Heizregisterleistung umfasst, wobei einer der nicht regelbaren Parameter eine Ablufttemperatur oder eine Produkttemperatur umfasst, wobei die Vorrichtung ausgebildet ist, die Ist-Korrelation zwischen der Heizregisterleistung und der Zulufttemperatur, zwischen der Heizregisterleistung und der Produkttemperatur, zwischen der Heizregisterleistung und der Ablufttemperatur, zwischen der Zulufttemperatur und der Ablufttemperatur, zwischen der Zulufttemperatur und der Produkttemperatur, oder zwischen der Produkttemperatur und der Ablufttemperatur zu bestimmen.

Es kann vorgesehen sein, dass die Maschine zum Mischen ausgebildet ist, wobei einer der regelbaren Parameter ein Drehmoment eines Motors zum Antrieb eines Mischers der Maschine umfasst, wobei einer der Regelparameter eine Drehzahl des Motors oder des Mischers umfasst, wobei einer der nicht regelbaren Parameter eine Leistung des Motors umfasst, wobei die Vorrichtung ausgebildet ist, die Ist-Korrelation zwischen der Drehzahl, dem Drehmoment und der Leistung zu bestimmen.

Es kann vorgesehen sein, dass die Maschine zum Tablettenpressen ausgebildet ist, wobei einer der regelbaren Parameter eine Leistung eines Motors zum Antrieb einer Tablettenpresseinrichtung der Maschine umfasst, wobei einer der Regelparameter eine Drehzahl des Motors umfasst, wobei einer der nicht regelbaren Parameter eine Kraftaufnahme des Motors umfasst, wobei die Vorrichtung ausgebildet ist, die Ist-Korrelation zwischen der Drehzahl, der Leistung und der Kraftaufnahme zu bestimmen.

Es kann vorgesehen sein, dass die Maschine zum Kapselfüllen ausgebildet ist, wobei einer der regelbaren Parameter eine Leistung eines Motors zum Antrieb einer Kapselfülleinrichtung der Maschine umfasst, wobei einer der Regelparameter eine Drehzahl des Motors der Kapselfülleinrichtung umfasst, wobei die Vorrichtung ausgebildet ist, die Ist-Korrelation zwischen der Drehzahl und der Leistung zu bestimmen.

Es kann vorgesehen sein, dass die Maschine zum Gefriertrocknen ausgebildet ist, wobei einer der regelbaren Parameter eine Kühlleistung eines Kühlers der Maschine umfasst, wobei einer der Regelparameter eine Temperatur eines Produkts in der Maschine umfasst, wobei einer der nicht regelbaren Parameter einen Druckabfall über der Zeit in der Maschine umfasst, wobei die Vorrichtung ausgebildet ist, die Ist-Korrelation zwischen der Kühlleistung, der Temperatur und dem Druckabfall über der Zeit zu bestimmen.

Es kann vorgesehen sein, dass die Maschine zum Verpacken ausgebildet ist, wobei einer der regelbaren Parameter eine Temperatur in der Maschine umfasst und wobei einer der Regelparameter einen Stellwert wenigstens eines Motors zum Antrieb einer Verpackungseinrichtung der Maschine umfasst, wobei die Vorrichtung ausgebildet ist, die Ist-Korrelation zwischen der Temperatur und dem Stellwert des wenigstens einen Motors zu bestimmen.

Das Verfahren zur Erkennung eines Fehlerzustandes einer Maschine oder eines Prozesses sieht vor, dass Ist-Werte von Parametern des Prozesses an der Maschine zur Durchführung des Prozesses erfasst werden, wobei die Parameter wenigstens einen regelbaren Prozessparameter des Prozesses, wenigstens einen nicht regelbaren Prozessparameter des Prozesses oder wenigstens einen Regelparameter zum Regeln des oder eines anderen regelbaren Prozessparameters im Prozess umfassen, wobei eine Soll-Korrelation für Ist-Werte von wenigstens zwei der Parameter vorgegeben werden, eine Ist-Korrelation abhängig von den Ist-Werten der wenigstens zwei der Parameter bestimmt wird, und abhängig von der Ist-Korrelation und der Soll-Korrelation einen Fehlerzustand der Maschine oder des Prozesses erkannt wird.

Vorzugsweise sieht das Verfahren vor, dass abhängig von der Soll-Korrelation einen Korridor für die Ist-Korrelation vorgegeben wird, wobei erkannt wird, dass die Ist-Korrelation außerhalb des Korridors liegt, und den Fehlerzustand erkannt wird, wenn die Ist-Korrelation außerhalb des Korridors liegt.

Es kann vorgesehen sein, dass die Soll-Korrelation einen Mittelwert einer Verteilung definiert, wobei eine Standardabweichung für die Verteilung vorgegeben und der Korridor abhängig vom Mittelwert und der Standardabweichung vorgegeben wird.

Vorzugsweise sieht das Verfahren vor, dass die Ist-Korrelation abhängig von den Ist-Werten von zwei der Parameter bestimmt wird.

Es kann vorgesehen sein, dass die Ist-Korrelation und der Korridor für unterschiedliche Paare der Parameter bestimmt wird und der Fehlerzustand erkannt wird, wenn die Ist-Korrelation wenigstens eines Paares der unterschiedlichen Paare von dem diesem Paar zugeordneten Korridor abweicht.

Vorzugsweise sieht das Verfahren vor, dass die Ist-Korrelation abhängig von den Ist-Werten von wenigstens drei der Parameter bestimmt wird.

Es kann vorgesehen sein, dass die Ist-Korrelation und der Korridor für mehrere Gruppen von Parametern, die unterschiedliche der wenigstens drei der Parameter umfassen, bestimmt wird, und der Fehlerzustand erkannt wird, wenn die Ist-Korrelation wenigstens einer der Gruppen von dem dieser Gruppe zugeordneten Korridor abweicht.

Vorzugsweise sieht das Verfahren vor, dass wenigstens ein weiterer Parameter zur Durchführung eines weiteren Prozesses erfasst wird, wobei der weitere Parameter wenigstens einen regelbaren Prozessparameter des weiteren Prozesses, wenigstens einen nicht regelbaren Prozessparameter des weiteren Prozesses oder wenigstens einen Regelparameter zum Regeln des oder eines regelbaren Prozessparameters im weiteren Prozess umfasst, wobei die Ist-Korrelation abhängig vom weiteren Parameter bestimmt wird.

Vorzugsweise sieht das Verfahren vor, dass ein zeitlicher Verlauf der Parameter erfasst wird, und die Ist-Korrelation abhängig vom zeitlichen Verlauf der Parameter bestimmt wird.

Es kann vorgesehen sein, dass die Maschine zur Wirbelschichttrocknung oder Tablettenbeschichtung ausgebildet ist, wobei einer der regelbaren Parameter eine Zulufttemperatur umfasst, wobei einer der Regelparameter eine Heizregisterleistung umfasst, wobei einer der nicht regelbaren Parameter eine Ablufttemperatur oder eine Produkttemperatur umfasst, wobei die Ist-Korrelation zwischen der Heizregisterleistung und der Zulufttemperatur, zwischen der Heizregisterleistung und der Produkttemperatur, zwischen der Heizregisterleistung und der Ablufttemperatur, zwischen der Zulufttemperatur und der Ablufttemperatur, zwischen der Zulufttemperatur und der Produkttemperatur, oder zwischen der Produkttemperatur und der Ablufttemperatur bestimmt wird.

Es kann vorgesehen sein, dass die Maschine zum Mischen ausgebildet ist, wobei einer der regelbaren Parameter ein Drehmoment eines Motors zum Antrieb eines Mischers der Maschine umfasst, wobei einer der Regelparameter eine Drehzahl des Motors oder des Mischers umfasst, wobei einer der nicht regelbaren Parameter eine Leistung des Motors umfasst, wobei die Ist-Korrelation zwischen der Drehzahl, dem Drehmoment und der Leistung bestimmt wird.

Es kann vorgesehen sein, dass die Maschine zum Tablettenpressen ausgebildet ist, wobei einer der regelbaren Parameter eine Leistung eines Motors zum Antrieb einer Tablettenpresseinrichtung der Maschine umfasst, wobei einer der Regelparameter eine Drehzahl des Motors umfasst, wobei einer der nicht regelbaren Parameter eine Kraftaufnahme des Motors umfasst, wobei die Ist-Korrelation zwischen der Drehzahl, der Leistung und der Kraftaufnahme bestimmt wird.

Es kann vorgesehen sein, dass die Maschine zum Kapselfüllen ausgebildet ist, wobei einer der regelbaren Parameter eine Leistung eines Motors zum Antrieb einer Kapselfülleinrichtung der Maschine umfasst, wobei einer der Regelparameter eine Drehzahl des Motors der Kapselfülleinrichtung umfasst, wobei die Ist-Korrelation zwischen der Drehzahl und der Leistung bestimmt wird.

Es kann vorgesehen sein, dass die Maschine zum Gefriertrocknen ausgebildet ist, wobei einer der regelbaren Parameter eine Kühlleistung eines Kühlers der Maschine umfasst, wobei einer der Regelparameter eine Temperatur eines Produkts in der Maschine umfasst, wobei einer der nicht regelbaren Parameter einen Druckabfall über der Zeit in der Maschine umfasst, wobei die Ist-Korrelation zwischen der Kühlleistung, der Temperatur und dem Druckabfall über der Zeit bestimmt wird.

Es kann vorgesehen sein, dass die Maschine zum Verpacken ausgebildet ist, wobei einer der regelbaren Parameter eine Temperatur in der Maschine umfasst und wobei einer der Regelparameter einen Stellwert wenigstens eines Motors zum Antrieb einer Verpackungseinrichtung der Maschine umfasst, wobei die Ist-Korrelation zwischen der Temperatur und dem Stellwert des wenigstens einen Motors bestimmt wird.

Weitere vorteilhafte Ausführungsformen sind der folgenden Beschreibung und der Zeichnung entnehmbar. In der Zeichnung zeigt:
- Fig. 1: eine schematische Darstellung einer Vorrichtung zur Erkennung eines Fehlerzustandes einer Maschine oder eines Prozesses,
- Fig. 2: eine schematische Darstellung von Zusammenhängen von Parametern der Maschine oder des Prozesses,
- Fig. 3: eine erste Ausführung eines Verfahrens zur Erkennung des Fehlerzustandes,
- Fig. 4: eine zweite Ausführung des Verfahrens zur Erkennung des Fehlerzustandes,
- Fig. 5: einen zeitlichen Verlauf einer Abweichung zweier Parameter,
- Fig. 6: einen Verlauf eines Korridors und einer Ist-Korrelation für zwei Parameter,
- Fig. 7: der Verlauf des Korridors und der Ist-Korrelation mit einem Fehlerzustand,
- Fig. 8: eine Lage von Werten für die Ist-Korrelation.

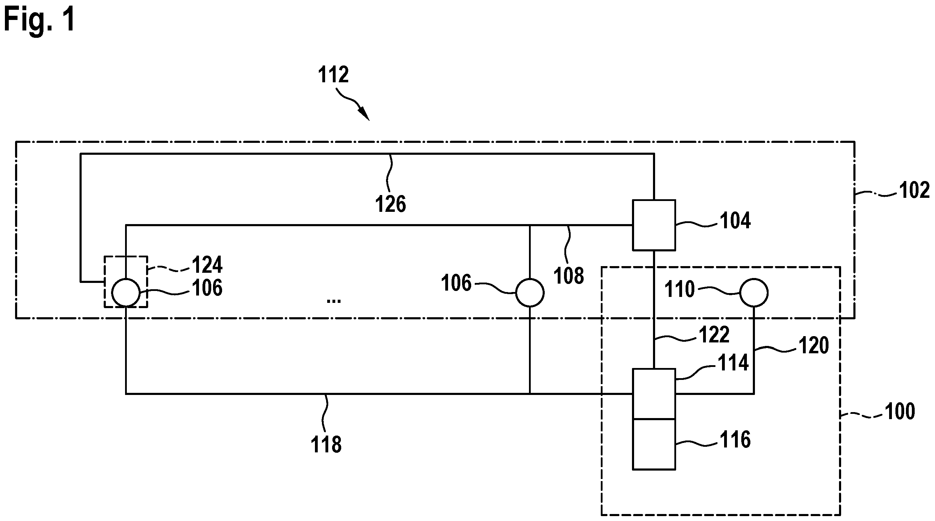

In Figur 1 ist eine Vorrichtung 100 zur Erkennung eines Fehlerzustandes einer Maschine 102 oder eines Prozesses schematisch dargestellt.

Die Maschine 102 ist ausgebildet, den Prozess durchzuführen.

Die Maschine 102 umfasst eine Steuerung 104, insbesondere eine Speicherprogrammierbare Steuerung, SPS. Die Steuerung 104 ist ausgebildet, die Maschine 102 zur Durchführung des Prozesses anzusteuern.

Die Maschine 102 wird z.B. über in der SPS hinterlegte Automatisierungstechnik abhängig von verschiedenen Parametern, insbesondere Prozess- oder Maschinenparametern angesteuert. Diese werden von der Steuerung 104 erfasst und können dort gespeichert werden. Der Prozess wird im Beispiel auf der Maschine 102 mit festgelegte Prozeduren durchlaufen, die z.B. durch eine in der Steuerung 104 hinterlegten Ablaufsteuerung vorgegeben werden.

Die Maschine 102 umfasst wenigstens einen Geber 106 zur Erfassung von Ist-Werten wenigstens eines Parameters des Prozesses oder der Maschine 102. Die Steuerung 104 ist über eine Leitung 108 mit wenigstens einem Geber 106 zum Empfang von Ist-Werten wenigstens eines Parameters des Prozesses oder der Maschine 102 verbunden.

Die Vorrichtung 100 kann in die Maschine 102 insbesondere die Steuerung 104 der Maschine 102 integriert sein. Die Vorrichtung 100 kann außerhalb der Maschine 102 angeordnet sein, z.B. in einem Rechenzentrum.

Die Vorrichtung 100 ist ausgebildet, Ist-Werte von Parametern des Prozesses an der Maschine 102 zu erfassen. Es kann vorgesehen sein, dass die Vorrichtung 100 ausgebildet ist, Ist-Werte wenigstens eines der Parameter von wenigstens einem Geber 106 der Maschine 102 zu empfangen. Es kann vorgesehen sein, dass die Vorrichtung 100 ausgebildet ist, Ist-Werte wenigstens eines der Parameter von der Steuerung 104 zu empfangen.

Es kann vorgesehen sein, dass die Vorrichtung 100 wenigstens einen Sensor 110 umfasst, der ausgebildet ist, einen Ist-Wert wenigstens eines der Parameter in der Maschine 102 oder einer Umgebung 112 der Maschine 102 zu erfassen.

Die Vorrichtung 100 umfasst im Beispiel eine Recheneinrichtung 114 und einen Speicher 116.

Die Vorrichtung ist ausgebildet, eine Soll-Korrelation für Ist-Werte von wenigstens zwei Parameter vorzugeben.

Die Vorrichtung 100 ist ausgebildet, eine Ist-Korrelation abhängig von den Ist-Werten der wenigstens zwei Parameter zu bestimmen.

Die Vorrichtung 100 ist ausgebildet, abhängig von der Ist-Korrelation und der Soll-Korrelation den Fehlerzustand der Maschine 102 oder des Prozesses zu erkennen.

Zur Bestimmung der Soll-Korrelation wird z.B. ein vorgegebener Ablauf des Prozesses entweder mit Produktionsmittel und Prozessmedien oder nur mit Prozessmedien durchlaufen.

Produktionsmittel sind z.B. Packstoffe oder Edukte. Prozessmedien sind z.B. Strom, Luft, Wärme.

Die Ist-Werte der Parameter zur Bestimmung der Soll-Korrelation sind Zielwerte, die z.B. bei einem ordnungsgemäßen Zustand der Maschine 102 erfasst und gespeichert werden.

Die Ist-Werte dieser Parameter zur Bestimmung der Ist-Korrelation werden in einem gleichen Ablauf an der Maschine 102 erfasst.

Mit mathematischen Verfahren werden die Korrelationen verglichen. Bei einer Abweichung zwischen Soll-Korrelation und Ist-Korrelation kann ein Fehlerzustand der Maschine 102 oder des Prozesses erkannt werden.

Die Soll-Korrelation ist z.B. im Speicher 116 gespeichert. Die Recheneinrichtung 114 ist ausgebildet, die Soll-Korrelation aus dem Speicher 116 vorzugeben.

Die Recheneinrichtung 114 ist ausgebildet, ein im Folgenden beschriebenes Verfahren auszuführen. Die Recheneinrichtung 114 ist ausgebildet, im Speicher 116 gespeicherte Instruktionen zur Ausführung des Verfahrens zu lesen und auszuführen.

Die Recheneinrichtung 114 ist in einer Ausführung ausgebildet, einen zeitlichen Verlauf der wenigstens zwei der Parameter im Speicher 116 zu speichern. Die Recheneinrichtung 114 ist in einer Ausführung dazu ausgebildet, mit dem wenigstens einen Geber 106 zum Empfang des wenigstens eines Parameters über wenigstens eine Kommunikationsleitung 118 zu kommunizieren. Die Recheneinrichtung 114 ist in einer Ausführung dazu ausgebildet, mit dem wenigstens einen Sensor 110 zum Empfang wenigstens eines Parameters über wenigstens eine Datenleitung 120 zu kommunizieren. Die Recheneinrichtung 114 ist in einer Ausführung dazu ausgebildet, mit der Steuerung 104 zum Empfang wenigstens eines Parameters über eine Kommunikationsleitung 122 zu kommunizieren.

Die Vorrichtung 100 ist in einer Ausführung ausgebildet, abhängig von der Soll-Korrelation einen Korridor für die Ist-Korrelation vorzugeben. Die Vorrichtung 100 ist in einer Ausführung ausgebildet, zu erkennen, dass die Ist-Korrelation außerhalb des Korridors liegt. Die Vorrichtung 100 ist in einer Ausführung ausgebildet, den Fehlerzustand zu erkennen, wenn die Ist-Korrelation außerhalb des Korridors liegt.

In einer Ausführung definiert die Soll-Korrelation einen Mittelwert einer Verteilung. Die Vorrichtung 100 ist ausgebildet, eine Standardabweichung für die Verteilung vorzugeben und den Korridor abhängig vom Mittelwert und der Standardabweichung vorzugeben.

In einer Ausführung ist die Vorrichtung 100 ausgebildet, die Ist-Korrelation abhängig von den Ist-Werten von zwei der Parameter zu bestimmen.

In einer Ausführung ist die Vorrichtung 100 ausgebildet, die Ist-Korrelation und den Korridor für unterschiedliche Paare der Parameter zu bestimmen und den Fehlerzustand zu erkennen, wenn die Ist-Korrelation wenigstens eines Paares der unterschiedlichen Paare von dem diesem Paar zugeordneten Korridor abweicht.

In einer Ausführung ist die Vorrichtung 100 ausgebildet, die Ist-Korrelation abhängig von den Ist-Werten von wenigstens drei der Parameter zu bestimmen.

In einer Ausführung ist die Vorrichtung 100 ausgebildet, die Ist-Korrelation und den Korridor für mehrere Gruppen von Parametern, die unterschiedliche der wenigstens drei der Parameter umfassen, zu bestimmen, und den Fehlerzustand zu erkennen, wenn die Ist-Korrelation wenigstens einer der Gruppen von dem dieser Gruppe zugeordneten Korridor abweicht.

In einer Ausführung ist die Vorrichtung 100 ausgebildet, einen zeitlichen Verlauf der Parameter zu erfassen, und die Ist-Korrelation abhängig vom zeitlichen Verlauf der Parameter zu bestimmen.

Die Maschine 102 umfasst wenigstens einen Aktuator 124 zur Beeinflussung des Prozesses. Die Steuerung 104 ist im Beispiel ausgebildet, den wenigstens einen Aktuator 124 über eine Leitung 126 zur Beeinflussung des Prozesses anzusteuern.

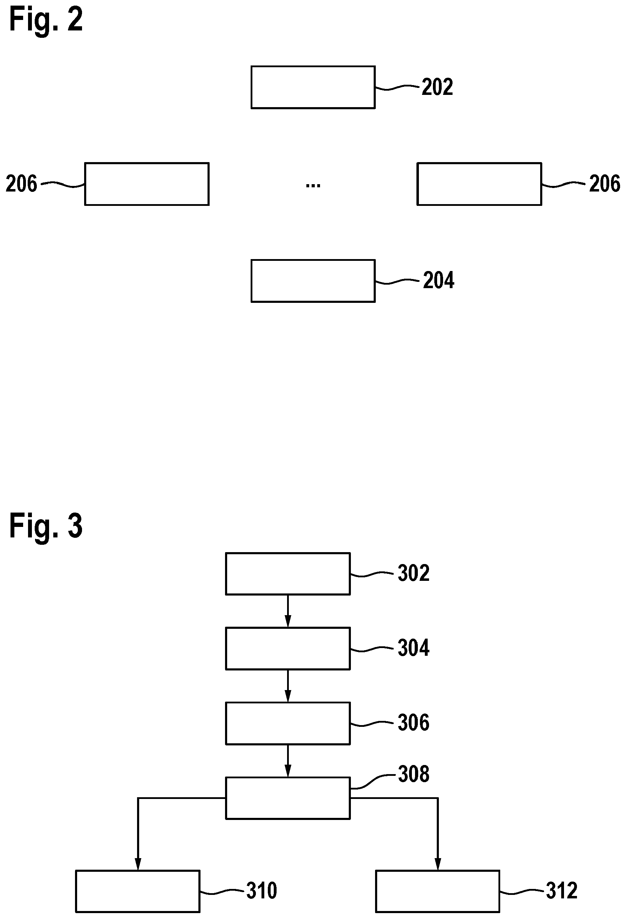

In Figur 2 sind Zusammenhänge der Parameter schematisch dargestellt.

Die Parameter umfassen wenigstens einen Regelparameter 202.

Die Parameter umfassen wenigstens einen regelbaren Prozessparameter 204 des Prozesses.

Die Parameter umfassen wenigstens einen nicht regelbaren Prozessparameter 206 des Prozesses.

Im Beispiel sind ein Regelparameter 202, ein regelbarer Prozessparameter 204 und zwei regelbare Prozessparameter 206 dargestellt. Es können mehr Regelparameter 202, mehr regelbare Prozessparameter 204 sowie mehr oder weniger nicht regelbare Prozessparameter 206 vorgesehen sein.

Die Steuerung 104 ist ausgebildet, den wenigstens einen Regelparameter 202 ist zum Regeln des wenigstens einen regelbaren Prozessparameters 204 im Prozess zu bestimmen und auszugeben.

Wenigstens ein Geber 106 oder der Sensor 110 ist ausgebildet, den oder die nicht regelbaren Prozessparameter zu erfassen. Die Steuerung 104 ist ausgebildet, den wenigstens einen Aktuator 124 mit dem wenigstens einen Regelparameter anzusteuern. Wenigstens ein Geber 106 oder der Sensor 110 ist ausgebildet, einen regelbaren Parameter insbesondere einen regelbaren Parameter des Aktuators 124 zu erfassen.

Im Folgenden werden verschiedene Ausführungen der Maschine 102 beschrieben.

Die Maschine 102 ist in einem Beispiel zur Wirbelschichttrocknung oder Tablettenbeschichtung ausgebildet.

Bei der Wirbelschichttrocknung oder Tablettenbeschichtung ist einer der regelbaren Parameter 204 eine Zulufttemperatur. Bei der Wirbelschichttrocknung oder Tablettenbeschichtung ist einer der Regelparameter 202 eine Heizregisterleistung eines Heizregisters, d.h. Aktuators 124, der Maschine 102. Bei der Wirbelschichttrocknung oder Tablettenbeschichtung ist einer der nicht regelbaren Parameter 206 eine Ablufttemperatur oder eine Produkttemperatur.

Die Vorrichtung 100 ist in einer Ausführung dazu ausgebildet, bei der Wirbelschichttrocknung oder Tablettenbeschichtung die Zulufttemperatur, die Heizregisterleistung und entweder die Ablufttemperatur oder die Produkttemperatur oder beide zu erfassen.

Die Vorrichtung 100 ist in einer Ausführung ausgebildet, wenigstens eine der folgenden Ist-Korrelationen zu bestimmen:
die Ist-Korrelation zwischen der Heizregisterleistung und der Zulufttemperatur,
die Ist-Korrelation zwischen der Heizregisterleistung und der Produkttemperatur,
die Ist-Korrelation zwischen der Heizregisterleistung und der Ablufttemperatur,
die Ist-Korrelation zwischen der Zulufttemperatur und der Ablufttemperatur,
die Ist-Korrelation zwischen der Zulufttemperatur und der Produkttemperatur,
die Ist-Korrelation zwischen der Produkttemperatur und der Ablufttemperatur.

Die Vorrichtung 100 ist z.B. ausgebildet, für je bestimmter Ist-Korrelation eine dieser zugeordnete Soll-Korrelation vorzugeben. Die Vorrichtung 100 ist z.B. ausgebildet, den Fehlerzustand zu erkennen, wenn ein Wert wenigstens einer Ist-Korrelation außerhalb des Korridors für diese Ist-Korrelation liegt.

Die Maschine 102 ist in einem Beispiel zur zum Mischen ausgebildet.

Beim Mischen ist einer der regelbaren Parameter 204 ein Drehmoment eines Motors, d.h. Aktuators 124, zum Antrieb eines Mischers der Maschine 102.

Beim Mischen ist einer der Regelparameter 202 eine Drehzahl des Motors oder des Mischers.

Beim Mischen ist einer der nicht regelbaren Parameter 206 eine Leistung des Motors.

Die Vorrichtung 100 ist in einer Ausführung dazu ausgebildet, beim Mischen die Drehzahl, das Drehmoment und die Leistung zu bestimmen.

In einer Ausführung ist die Vorrichtung 100 ausgebildet, die Ist-Korrelation zwischen der Drehzahl, dem Drehmoment und der Leistung zu bestimmen.

Beim Tablettenpressen ist einer der Regelparameter 202 eine Drehzahl des Motors. In einer Ausführung ist die Maschine 102 zum Tablettenpressen ausgebildet. Beim Tablettenpressen ist einer der regelbaren Parameter 204 eine Leistung eines Motors zum Antrieb einer Tablettenpresseinrichtung der Maschine 102. Beim Tablettenpressen ist einer der nicht regelbaren Parameter 206 eine Kraftaufnahme des Motors.

Die Vorrichtung 100 ist in einer Ausführung dazu ausgebildet, die Ist-Korrelation zwischen der Drehzahl, der Leistung und der Kraftaufnahme zu bestimmen.

In einer Ausführung ist die Maschine 102 zum Kapselfüllen ausgebildet.

Beim Kapselfüllen ist einer der regelbaren Parameter 204 eine Leistung eines Motors, d.h. Aktuators 124, zum Antrieb einer Kapselfülleinrichtung der Maschine 102. Beim Kapselfüllen ist einer der Regelparameter 202 eine Drehzahl des Motors der Kapselfülleinrichtung. Die Vorrichtung 100 ist in einer Ausführung ausgebildet, beim Kapselfüllen die Drehzahl und die Leistung zu erfassen. Die Vorrichtung 100 ist in einer Ausführung ausgebildet, die Ist-Korrelation zwischen der Drehzahl und der Leistung zu bestimmen.

In einer Ausführung ist die Maschine 102 zum Gefriertrocknen ausgebildet.

Beim Gefriertrocken ist einer der regelbaren Parameter 204 eine Kühlleistung eines Kühlers, d.h. Aktuators 124, der Maschine 102. Beim Gefriertrocken ist einer der Regelparameter 202 eine Temperatur eines Produkts in der Maschine 102. Beim Gefriertrocknen ist einer der nicht regelbaren Parameter 206 einen Druckabfall über der Zeit in der Maschine 102.

Die Vorrichtung 100 ist in einer Ausführung ausgebildet, beim Gefriertrocknen die Kühlleistung, die Temperatur und den Druckabfall über der Zeit zu erfassen.

Die Vorrichtung 100 ist in einer Ausführung ausgebildet, die Ist-Korrelation zwischen der Kühlleistung, der Temperatur und dem Druckabfall über der Zeit zu bestimmen.

In einer Ausführung ist die Maschine 102 zum Verpacken ausgebildet. Beim Verpacken ist einer der regelbaren Parameter 204 eine Temperatur in der Maschine 102. Beim Verpacken ist einer der Regelparameter 202 ein Stellwert wenigstens eines Motors, d.h. Aktuators 124, zum Antrieb einer Verpackungseinrichtung der Maschine 102.

Die Vorrichtung 100 ist in einer Ausführung dazu ausgebildet, beim Verpacken die Temperatur und den Stellwert zu erfassen.

In einer Ausführung ist die Vorrichtung 100 ausgebildet, die Ist-Korrelation zwischen der Temperatur und dem Stellwert des wenigstens einen Motors zu bestimmen.

Die Maschine 102 ist in einer Ausführung in eine Anlage integriert. Es kann vorgesehen sein, dass die Vorrichtung 100 zur Erkennung des Fehlerzustandes der Maschine 102 abhängig von Parametern ausgebildet ist, die von einer Mehrzahl von Maschinen der Anlage erfasst werden. Es kann vorgesehen sein, dass die Vorrichtung 100 zur Erkennung des Fehlerzustandes der Maschine 102 abhängig von Parametern ausgebildet ist, die von einer Mehrzahl von Prozessen erfasst werden, die auf der Anlage oder der Maschine 102 ablaufen.

In einer Ausführung ist die Vorrichtung 100 ausgebildet, wenigstens einen weiteren Parameter zur Durchführung eines weiteren Prozesses zu erfassen und die Ist-Korrelation abhängig vom weiteren Parameter zu bestimmen.

Der wenigstens eine weitere Parameter umfasst wenigstens einen regelbaren Prozessparameter 204 des weiteren Prozesses, wenigstens einen nicht regelbaren Prozessparameter 206 des weiteren Prozesses oder wenigstens einen Regelparameter 202 zum Regeln des regelbaren Prozessparameters 202 oder eines anderen regelbaren Prozessparameters im weiteren Prozess.

Im Folgenden werden verschiedene Ausführungen des Verfahrens zur Erkennung des Fehlerzustandes der Maschine 102 oder des Prozesses dargestellt. Fehlerzustand der Maschine 102 bedeutet beispielsweise, dass ein Bauteil der Maschine 102 einen Defekt hat oder außerhalb seiner Norm arbeitet. Fehlerzustand des Prozesses bedeutet beispielsweise, dass der Prozess außerhalb seiner Norm abläuft.

Es kann vorgesehen sein, die Ist-Korrelation, welche zum Erkennen des Fehlerzustandes führt, nach Erkennung des Fehlerzustandes auszugeben. Die Ursache für den Fehlerzustand ist beispielsweise nach der Fehlererkennung insbesondere abhängig von dieser Ist-Korrelation feststellbar.

In Figur 3 sind Schritte einer ersten Ausführung des Verfahrens dargestellt. In der ersten Ausführung wird wenigstens eine univariate Korrelation ausgewertet.

In einem Schritt 302 werden die Ist-Werte der Parameter des Prozesses an der Maschine 102 erfasst. Die Ist-Werte werden im Beispiel während der Durchführung des Prozesses erfasst.

In einer Ausführung des Verfahrens für mehrere Maschinen kann vorgesehen sein, dass der wenigstens eine weitere Parameter zur Durchführung eines weiteren Prozesses an einer anderen Maschine im weiteren Prozess erfasst wird.

Im Beispiel wird ein zeitlicher Verlauf der Parameter erfasst.

In einem Schritt 304 wird die Soll-Korrelation vorgegeben. Die Soll-Korrelation ist beispielsweise eine Korrelation von Ist-Werten derselben Parameter, die an einer Referenzmaschine bei einer Ausführung eines Referenzprozesses durch die Referenzmaschine mit Referenzgebern oder Referenzsensoren erfasst werden. Die Soll-Korrelation ist beispielsweise eine Korrelation von Ist-Werten derselben Parameter, die in einer Simulation, z.B. einer Alterungssimulation, bestimmt werden.

In einer Ausführung wird abhängig von der Soll-Korrelation der Korridor für die Ist-Korrelation vorgegeben.

In einer Ausführung wird die Standardabweichung für die Verteilung vorgegeben und der Korridor abhängig von dem durch die Soll-Korrelation definierten Mittelwert und der Standardabweichung vorgegeben.

In der Ausführung des Verfahrens für mehrere Maschinen ist vorgesehen, dass die Soll-Korrelation abhängig vom wenigstens einem weiteren Parameter bestimmt wird, dessen Ist-Werte an einer jeweiligen Referenzmaschine bei einer Ausführung eines jeweiligen Referenzprozesses durch die jeweilige Referenzmaschine erfasst werden oder die in einer jeweiligen Simulation bestimmt werden.

In einem Schritt 306 wird die Ist-Korrelation abhängig von den Ist-Werten bestimmt. Die Ist-Korrelation wird in der ersten Ausführung abhängig von den Ist-Werten von zwei der Parameter bestimmt.

In der Ausführung des Verfahrens für mehrere Maschinen ist vorgesehen, dass die Ist-Korrelation abhängig vom wenigstens einen weiteren Parameter bestimmt wird.

Im Beispiel wird die Ist-Korrelation abhängig vom zeitlichen Verlauf der Parameter bestimmt.

In einem Schritt 308 wird die Ist-Korrelation mit der Soll-Korrelation verglichen.

In einer Ausführung wird geprüft, ob die Ist-Korrelation außerhalb oder innerhalb des Korridors liegt.

Wenn die Ist-Korrelation außerhalb des Korridors liegt, wird ein Schritt 310 ausgeführt. Anderenfalls wird ein Schritt 312 ausgeführt.

Im Schritt 310 wird abhängig von der Ist-Korrelation und der Soll-Korrelation der Fehlerzustand der Maschine 102 oder des Prozesses erkannt.

In einer Ausführung wird der Fehlerzustand erkannt, wenn die Ist-Korrelation außerhalb des Korridors liegt.

Es kann vorgesehen sein, dass die Ist-Korrelation und der Korridor für unterschiedliche Paare der Parameter bestimmt wird und der Fehlerzustand erkannt wird, wenn die Ist-Korrelation wenigstens eines Paares der unterschiedlichen Paare von dem diesem Paar zugeordneten Korridor abweicht.

Im Schritt 312 wird kein Fehlerzustand erkannt.

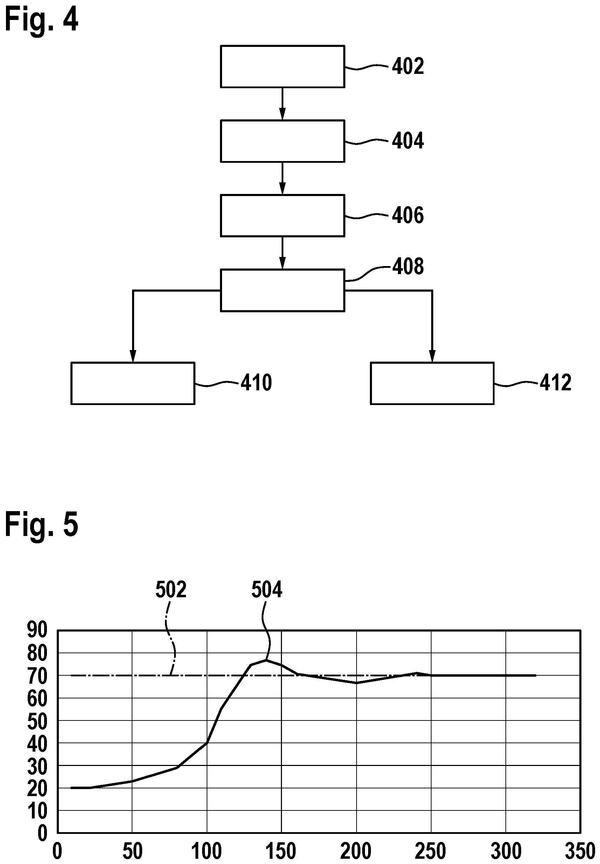

In Figur 4 sind Schritte einer zweiten Ausführung des Verfahrens dargestellt. In der zweiten Ausführung wird wenigstens eine multivariate Korrelation ausgewertet.

In einem Schritt 402 werden die Ist-Werte der Parameter des Prozesses an der Maschine 102 oder des Prozesses an der Maschine 102 und des wenigstens einen weiteren Prozesses an der wenigstens einen weiteren Maschine erfasst.

Im Schritt 402 werden wenigstens drei Parameter erfasst.

In einem Schritt 404 wird die Soll-Korrelation für diese Ist-Werte vorgegeben. In einer Ausführung wird der entsprechende Korridor vorgegeben.

In einem Schritt 406 wird die Ist-Korrelation abhängig von den Ist-Werten von wenigstens drei der Parameter bestimmt.

In einem Schritt 408 wird die Ist-Korrelation mit der Soll-Korrelation verglichen.

In einer Ausführung wird geprüft, ob die Ist-Korrelation außerhalb oder innerhalb des Korridors liegt.

Wenn die Ist-Korrelation außerhalb des Korridors liegt, wird ein Schritt 410 ausgeführt. Anderenfalls wird ein Schritt 412 ausgeführt.

Im Schritt 410 wird abhängig von der Ist-Korrelation und der Soll-Korrelation der Fehlerzustand der Maschine 102 oder des Prozesses erkannt.

In einer Ausführung wird der Korridor für mehrere Gruppen von Parametern, die unterschiedliche der wenigstens drei der Parameter umfassen, bestimmt. In dieser Ausführung ist vorgesehen, dass die Ist-Korrelation für die mehreren Gruppen von Parametern bestimmt wird. In dieser Ausführung wird der Fehlerzustand erkannt, wenn die Ist-Korrelation wenigstens einer der Gruppen von dem dieser Gruppe zugeordneten Korridor abweicht.

Durch das Verfahren werden univariate oder multivariate Korrelationen ausgewertet, wobei der Fehlerzustand erkannt wird, wenn eine der Ist-Korrelationen von der ihr zugeordneten Soll-Korrelation mehr als eine durch die Standardabweichung vorgegebene Toleranz abweicht.

Es kann vorgesehen sein, univariate und multivariate Korrelationen auszuwerten, wobei der Fehlerzustand erkannt wird, wenn eine der Ist-Korrelationen von der ihr zugeordneten Soll-Korrelation mehr als die durch die Standardabweichung vorgegebene Toleranz abweicht.

Beispielsweise wird wie für die erste Ausführung des Verfahrens beschrieben, eine univariate Korrelationen für die Maschine 102 zum Verpacken ausgewertet. Z.B. wird die univariate Korrelation zwischen der Temperatur und dem Stellwert des wenigstens einen Motors bestimmt und ausgewertet.

Beispielsweise wird wie für die erste Ausführung des Verfahrens beschrieben, eine univariate Korrelationen für die Maschine 102 zum Kapselfüllen ausgewertet. Z.B. wird die univariate Korrelation zwischen der Drehzahl und der Leistung bestimmt und ausgewertet.

Beispielsweise werden wie für die erste Ausführung des Verfahrens beschrieben, univariate Korrelationen für die Maschine 102 zur Wirbelschichttrocknung oder Tablettenbeschichtung ausgewertet. Z.B. wird eine univariate Korrelation zwischen der Heizregisterleistung und der Zulufttemperatur, zwischen der Heizregisterleistung und der Produkttemperatur, zwischen der Heizregisterleistung und der Ablufttemperatur, zwischen der Zulufttemperatur und der Ablufttemperatur, zwischen der Zulufttemperatur und der Produkttemperatur, oder zwischen der Produkttemperatur und der Ablufttemperatur bestimmt und ausgewertet.

Beispielsweise werden wie für die zweite Ausführung des Verfahrens beschrieben, multivariate Korrelationen für die Maschine 102 zum Mischen ausgewertet. Z.B. wird eine multivariate Korrelation zwischen der Drehzahl, dem Drehmoment und der Leistung bestimmt und ausgewertet.

Beispielsweise werden wie für die zweite Ausführung des Verfahrens beschrieben, multivariate Korrelationen für die Maschine 102 zum Tablettenpressen ausgewertet. Z.B. wird die multivariate Korrelation zwischen der Drehzahl, der Leistung und der Kraftaufnahme bestimmt und ausgewertet.

Beispielsweise werden wie für die zweite Ausführung des Verfahrens beschrieben, multivariate Korrelationen für die Maschine 102 Gefriertrocknen ausgewertet. Z.B. wird die multivariate Korrelation zwischen der Kühlleistung, der Temperatur und dem Druckabfall über der Zeit bestimmt und ausgewertet.

Das Verfahren kann eine Hauptkomponentenanalyse der Ist-Werte unterschiedlicher Parameter vorsehen, wobei ein Parameter identifiziert wird, der eine Hauptkomponente für eine Abweichung der Ist-Korrelation von der Soll-Korrelation. Die Hauptkomponente identifiziert eine Ursache für den Fehlerzustand.

Das Verfahren kann vorsehen, dass der Fehlerzustand erkannt wird, wenn eine Änderung der Ist-Korrelation festgestellt wird, die von einer Änderung der Soll-Korrelation abweicht. Beispielsweise wird eine Ableitung oder ein Trend der Korrelationen ausgewertet.

Das Verfahren kann vorsehen, dass die Soll-Korrelation durch einen Wert in einem Zustandsraum vorgegeben wird, wobei die Ist-Werte der Parameter einen Wert der Ist-Korrelation im Zustandsraum abgebildet werden. Es kann vorgesehen sein, dass der Fehlerzustand erkannt wird, wenn ein Abstand des Werts der Ist-Korrelation vom Wert der Soll-Korrelation einen Schwellwert übersteigt. Es kann vorgesehen sein, anderenfalls keinen Fehlerzustand zu erkennen.

Es kann vorgesehen sein, dass ein künstliches neuronales Netz mit einem Trainingsdatensatz dazu trainiert ist oder wird, die Ist-Werten in den Zustandsraum abzubilden. Es kann vorgesehen sein, dass das künstliche neuronale Netz mit dem Trainingsdatensatz dazu trainiert ist oder wird, den Abstand des Werts der Ist-Korrelation vom Wert der Soll-Korrelation auf eine Ausgabe abzubilden, die entweder das Vorliegen oder die Abwesenheit des Fehlerzustands charakterisiert.

In Figur 5 ist ein zeitlicher Verlauf einer Abweichung eines Regelparameters 502 und eines regelbaren Parameters 504 dargestellt. Der Regelparameter hat im Beispiel einen konstanten Wert. Der regelbare Parameter 504 ist zunächst kleiner als der Regelparameter 502 und erreicht den konstanten Wert nach einem Überschwinger über den konstanten Wert, einem Unterschwinger unter den konstanten Wert und einem weiteren Überschwinger über den konstanten Wert. Im Beispiel ist der Regelparameter 502 ein Sollwert von 70°C für eine Zulufttemperatur und der regelbare Parameter 504 die Zulufttemperatur, die ausgehend von 20°C den Sollwert von 70°C erreicht.

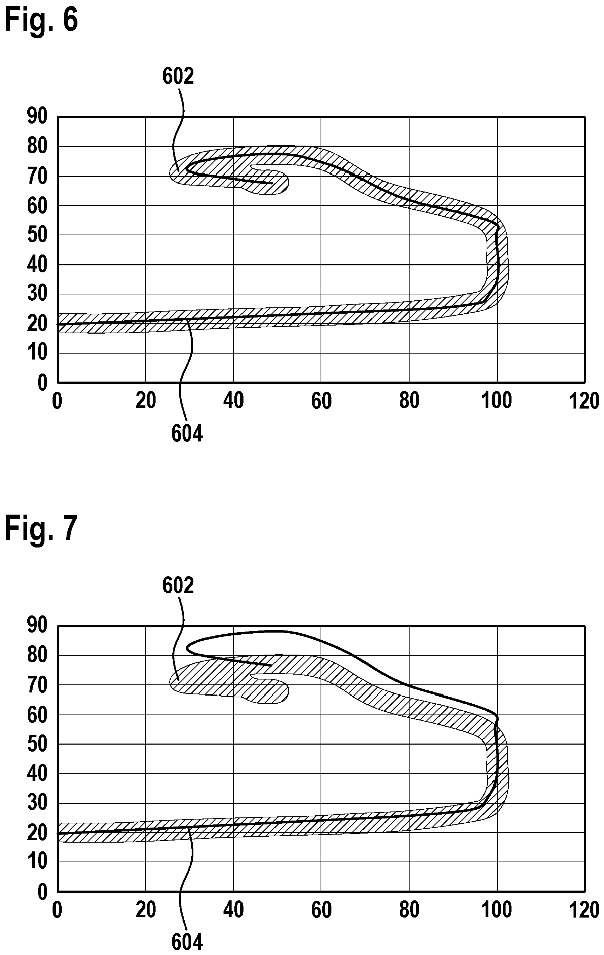

In Figur 6 ist ein Verlauf eines Korridors 602 dargestellt, in dem eine Ist-Korrelation 604 verlaufen soll, damit kein Fehlerzustand erkannt wird. Im Beispiel ist der Korridor 602 für die Soll-Korrelation zwischen einem Sollwert für eine Leistung eines Heizregister, das die Zulufttemperatur erhitzt, und der Zulufttemperatur dargestellt. Bei einem Sollwert für das Heizregister von 0% liegt der Mittelwert der aufgrund der Soll-Korrelation zu erwartende Zulufttemperatur bei 20°C. Mit von 0% auf 100% zunehmender Leistung des Heizregisters steigt der Mittelwert von 20°C auf 30°C an und erhöht sich bei 100 % Leistung auf 65°C. Anschließend erhöht sich der Mittelwert auf 87°C während die Leistung von 100% auf 50% sinkt. Anschließend sinkt der Mittelwert auf 70°C ab, während die Leistung weiter auf 25% sinkt. Anschließend wird die Leistung auf 50% erhöht, wobei der Mittelwert auf 68° sinkt.

Die Ist-Korrelation 604 verläuft in dem im Beispiel in Figur 6 dargestellten Fall innerhalb des Korridors 602. Das bedeutet, es wird kein Fehlerzustand erkannt.

In Figur 7 ist der Verlauf des Korridors 602 dargestellt, in dem die Ist-Korrelation 604 verlaufen soll. Im Unterschied zu dem in Figur 6 dargestellten Fall, verlässt die Ist-Korrelation 604 bei der Leistung 100% den Korridor. Das bedeutet, es wird ein Fehlerzustand erkannt.

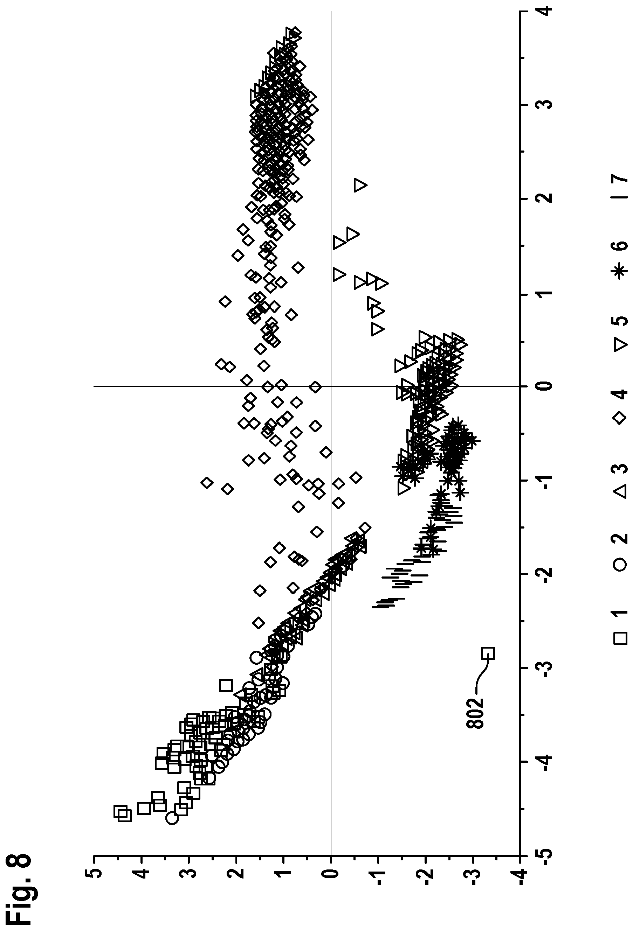

In Figur 8 ist eine Lage von Werten für die Ist-Korrelation für sieben Verschiedene Kombinationen von je zwei verschiedenen Parameter bei mehreren Durchführungen des Prozesses auf der Maschine 102 in einem Zustandsraum schematisch dargestellt.

Die Werte der Ist-Korrelation, die für dieselben zwei Parameter in den verschiedenen Durchläufen bestimmt werden, häufen sich, mit Ausnahme eines Werts 802 je in einer Wolke.

Im Beispiel stellt ein jeweiliger Mittelwert der Werte der Ist-Korrelation einer jeweiligen Wolke die Soll-Korrelation für diese Wolke dar. Der Schwellwert, ab dem der Fehlerzustand erkannt wird, wird z.B. vorgegeben.

Der Fehlerzustand wird z.B. für den Wert 802 erkannt. Das bedeutet, sein Abstand vom Mittelwert seiner Wolke ist größer als der Schwellwert. Für die anderen Werte wird in diesem Beispiel kein Fehlerzustand erkannt.

## Patentansprüche

1. Vorrichtung (100) zur Erkennung eines Fehlerzustandes einer Maschine (102) oder eines Prozesses, **dadurch gekennzeichnet, dass** die Vorrichtung (100) ausgebildet ist, Ist-Werte von Parametern des Prozesses an der Maschine (102)zur Durchführung des Prozesses zu erfassen, wobei die Parameter wenigstens einen regelbaren Prozessparameter (204) des Prozesses, wenigstens einen nicht regelbaren Prozessparameter (206) des Prozesses oder wenigstens einen Regelparameter (202) zum Regeln des oder eines anderen regelbaren Prozessparameters (204) im Prozess umfassen, wobei die Vorrichtung (100) ausgebildet ist, eine Soll-Korrelation für Ist-Werte von wenigstens zwei der Parameter vorzugeben, eine Ist-Korrelation abhängig von den Ist-Werten der wenigstens zwei der Parameter zu bestimmen, und abhängig von der Ist-Korrelation und der Soll-Korrelation einen Fehlerzustand der Maschine (102) oder des Prozesses zu erkennen.

2. Vorrichtung (100) nach Anspruch 1, **dadurch gekennzeichnet, dass** die Vorrichtung (100) ausgebildet ist, abhängig von der Soll-Korrelation einen Korridor für die Ist-Korrelation vorzugeben, zu erkennen, dass die Ist-Korrelation außerhalb des Korridors liegt, und den Fehlerzustand zu erkennen, wenn die Ist-Korrelation außerhalb des Korridors liegt.

3. Vorrichtung (100) nach Anspruch 2, **dadurch gekennzeichnet, dass** die Soll-Korrelation einen Mittelwert einer Verteilung definiert, wobei die Vorrichtung (100) ausgebildet ist, eine Standardabweichung für die Verteilung vorzugeben, und den Korridor abhängig vom Mittelwert und der Standardabweichung vorzugeben.

4. Vorrichtung (100) nach einem der Ansprüche 1 bis 3, **dadurch gekennzeichnet, dass** die Vorrichtung (100) ausgebildet ist, die Ist-Korrelation abhängig von den Ist-Werten von zwei der Parameter zu bestimmen.

5. Vorrichtung (100) nach Anspruch 4, **dadurch gekennzeichnet, dass** die Vorrichtung (100) ausgebildet ist, die Ist-Korrelation und den Korridor für unterschiedliche Paare der Parameter zu bestimmen und den Fehlerzustand zu erkennen, wenn die Ist-Korrelation wenigstens eines Paares der unterschiedlichen Paare von dem diesem Paar zugeordneten Korridor abweicht.

6. Vorrichtung (100) nach einem der Ansprüche 1 bis 3, **dadurch gekennzeichnet, dass** die Vorrichtung (100) ausgebildet ist, die Ist-Korrelation abhängig von den Ist-Werten von wenigstens drei der Parameter zu bestimmen.

7. Vorrichtung (100) nach Anspruch 6, **dadurch gekennzeichnet, dass** die Vorrichtung (100) ausgebildet ist, die Ist-Korrelation und den Korridor für mehrere Gruppen von Parametern, die unterschiedliche der wenigstens drei der Parameter umfassen, zu bestimmen, und den Fehlerzustand zu erkennen, wenn die Ist-Korrelation wenigstens einer der Gruppen von dem dieser Gruppe zugeordneten Korridor abweicht.

8. Vorrichtung (100) nach einem der vorherigen Ansprüche, **dadurch gekennzeichnet, dass** die Vorrichtung (100) ausgebildet ist, wenigstens einen weiteren Parameter zur Durchführung eines weiteren Prozesses zu erfassen, wobei der weitere Parameter wenigstens einen regelbaren Prozessparameter (204) des weiteren Prozesses, wenigstens einen nicht regelbaren Prozessparameter (206) des weiteren Prozesses oder wenigstens einen Regelparameter (202) zum Regeln des oder eines regelbaren Prozessparameters (202) im weiteren Prozess umfasst, wobei die Vorrichtung (100) ausgebildet ist, die Ist-Korrelation abhängig vom weiteren Parameter zu bestimmen, oder dass die Vorrichtung (100) ausgebildet ist, einen zeitlichen Verlauf der Parameter zu erfassen, und die Ist-Korrelation abhängig vom zeitlichen Verlauf der Parameter zu bestimmen.

9. Vorrichtung (100) nach einem der vorherigen Ansprüche, **dadurch gekennzeichnet, dass** die Maschine (102)zur Wirbelschichttrocknung oder Tablettenbeschichtung ausgebildet ist, wobei einer der regelbaren Parameter (204) eine Zulufttemperatur umfasst, wobei einer der Regelparameter (202) eine Heizregisterleistung umfasst, wobei einer der nicht regelbaren Parameter (206) eine Ablufttemperatur oder eine Produkttemperatur umfasst, wobei die Vorrichtung (100) ausgebildet ist, die Ist-Korrelation zwischen der Heizregisterleistung und der Zulufttemperatur, zwischen der Heizregisterleistung und der Produkttemperatur, zwischen der Heizregisterleistung und der Ablufttemperatur, zwischen der Zulufttemperatur und der Ablufttemperatur, zwischen der Zulufttemperatur und der Produkttemperatur, oder zwischen der Produkttemperatur und der Ablufttemperatur zu bestimmen, oder dass die Maschine (102) zum Mischen ausgebildet ist, wobei einer der regelbaren Parameter (204) ein Drehmoment eines Motors zum Antrieb eines Mischers der Maschine (102) umfasst, wobei einer der Regelparameter (202) eine Drehzahl des Motors oder des Mischers umfasst, wobei einer der nicht regelbaren Parameter (206) eine Leistung des Motors umfasst, wobei die Vorrichtung (100) ausgebildet ist, die Ist-Korrelation zwischen der Drehzahl, dem Drehmoment und der Leistung zu bestimmen, oder dass die Maschine (102) zum Tablettenpressen ausgebildet ist, wobei einer der regelbaren Parameter (204) eine Leistung eines Motors zum Antrieb einer Tablettenpresseinrichtung der Maschine (102)umfasst, wobei einer der Regelparameter (202) eine Drehzahl des Motors umfasst, wobei einer der nicht regelbaren Parameter (206) eine Kraftaufnahme des Motors umfasst, wobei die Vorrichtung (100) ausgebildet ist, die Ist-Korrelation zwischen der Drehzahl, der Leistung und der Kraftaufnahme zu bestimmen, oder dass die Maschine (102) zum Kapselfüllen ausgebildet ist, wobei einer der regelbaren Parameter (204) eine Leistung eines Motors zum Antrieb einer Kapselfülleinrichtung der Maschine (102) umfasst, wobei einer der Regelparameter (202) eine Drehzahl des Motors der Kapselfülleinrichtung umfasst, wobei die Vorrichtung (100) ausgebildet ist, die Ist-Korrelation zwischen der Drehzahl und der Leistung zu bestimmen, oder dass die Maschine (102) zum Gefriertrocknen ausgebildet ist, wobei einer der regelbaren Parameter (204) eine Kühlleistung eines Kühlers der Maschine (102)umfasst, wobei einer der Regelparameter (202) eine Temperatur eines Produkts in der Maschine (102) umfasst, wobei einer der nicht regelbaren Parameter (206) einen Druckabfall über der Zeit in der Maschine (102) umfasst, wobei die Vorrichtung (100) ausgebildet ist, die Ist-Korrelation zwischen der Kühlleistung, der Temperatur und dem Druckabfall über der Zeit zu bestimmen, oder dass die Maschine (102) zum Verpacken ausgebildet ist, wobei einer der regelbaren Parameter (204) eine Temperatur in der Maschine (102) umfasst und wobei einer der Regelparameter (202) einen Stellwert wenigstens eines Motors zum Antrieb einer Verpackungseinrichtung der Maschine (102)umfasst, wobei die Vorrichtung (100) ausgebildet ist, die Ist-Korrelation zwischen der Temperatur und dem Stellwert des wenigstens einen Motors zu bestimmen.

10. Verfahren zur Erkennung eines Fehlerzustandes einer Maschine (102) oder eines Prozesses, **dadurch gekennzeichnet, dass** Ist-Werte von Parametern des Prozesses an der Maschine (102) zur Durchführung des Prozesses erfasst werden (302, 402), wobei die Parameter wenigstens einen regelbaren Prozessparameter (204) des Prozesses, wenigstens einen nicht regelbaren Prozessparameter (206) des Prozesses oder wenigstens einen Regelparameter (202) zum Regeln des oder eines anderen regelbaren Prozessparameters (204) im Prozess umfassen, wobei eine Soll-Korrelation für Ist-Werte von wenigstens zwei der Parameter vorgegeben werden (304, 404), eine Ist-Korrelation abhängig von den Ist-Werten der wenigstens zwei der Parameter bestimmt wird (306, 406), und abhängig von der Ist-Korrelation und der Soll-Korrelation einen Fehlerzustand der Maschine (102)oder des Prozesses erkannt wird (310, 410).

11. Verfahren nach Anspruch 10, **dadurch gekennzeichnet, dass** abhängig von der Soll-Korrelation einen Korridor für die Ist-Korrelation vorgegeben wird (304, 404), wobei erkannt wird (308, 408) dass die Ist-Korrelation außerhalb des Korridors liegt, und den Fehlerzustand erkannt wird (310, 410), wenn die Ist-Korrelation außerhalb des Korridors liegt.

12. Verfahren nach Anspruch 11, **dadurch gekennzeichnet, dass** die Soll-Korrelation einen Mittelwert einer Verteilung definiert, wobei eine Standardabweichung für die Verteilung vorgegeben und der Korridor abhängig vom Mittelwert und der Standardabweichung vorgegeben wird (304, 404).

13. Verfahren nach einem der Ansprüche 10 bis 12, **dadurch gekennzeichnet, dass** die Ist-Korrelation abhängig von den Ist-Werten von zwei der Parameter bestimmt wird (306) .

14. Verfahren nach Anspruch 13, **dadurch gekennzeichnet, dass** die Ist-Korrelation und der Korridor für unterschiedliche Paare der Parameter bestimmt wird und der Fehlerzustand erkannt wird (310), wenn die Ist-Korrelation wenigstens eines Paares der unterschiedlichen Paare von dem diesem Paar zugeordneten Korridor abweicht.

15. Verfahren nach einem der Ansprüche 10 bis 14, **dadurch gekennzeichnet, dass** die Ist-Korrelation abhängig von den Ist-Werten von wenigstens drei der Parameter bestimmt wird (406).

16. Verfahren nach Anspruch 15, **dadurch gekennzeichnet, dass** die Ist-Korrelation und der Korridor für mehrere Gruppen von Parametern, die unterschiedliche der wenigstens drei der Parameter umfassen, bestimmt wird (406), und der Fehlerzustand erkannt wird (410), wenn die Ist-Korrelation wenigstens einer der Gruppen von dem dieser Gruppe zugeordneten Korridor abweicht.

17. Verfahren nach einem der Ansprüche 10 bis 16, **dadurch gekennzeichnet, dass** wenigstens ein weiterer Parameter zur Durchführung eines weiteren Prozesses erfasst wird (302, 402), wobei der weitere Parameter wenigstens einen regelbaren Prozessparameter (204) des weiteren Prozesses, wenigstens einen nicht regelbaren Prozessparameter (206) des weiteren Prozesses oder wenigstens einen Regelparameter (202) zum Regeln des oder eines regelbaren Prozessparameters (202) im weiteren Prozess umfasst, wobei die Ist-Korrelation abhängig vom weiteren Parameter bestimmt wird (306, 406), und/oder dass ein zeitlicher Verlauf der Parameter erfasst wird (302, 402), und die Ist-Korrelation abhängig vom zeitlichen Verlauf der Parameter bestimmt wird (306, 406).

18. Verfahren nach einem der Ansprüche 10 bis 17, **dadurch gekennzeichnet, dass** die Maschine (102)zur Wirbelschichttrocknung oder Tablettenbeschichtung ausgebildet ist, wobei einer der regelbaren Parameter (204) eine Zulufttemperatur umfasst, wobei einer der Regelparameter (202) eine Heizregisterleistung umfasst, wobei einer der nicht regelbaren Parameter (206) eine Ablufttemperatur oder eine Produkttemperatur umfasst, wobei die Ist-Korrelation zwischen der Heizregisterleistung und der Zulufttemperatur, zwischen der Heizregisterleistung und der Produkttemperatur, zwischen der Heizregisterleistung und der Ablufttemperatur, zwischen der Zulufttemperatur und der Ablufttemperatur, zwischen der Zulufttemperatur und der Produkttemperatur, oder zwischen der Produkttemperatur und der Ablufttemperatur bestimmt wird, oder dass die Maschine (102) zum Mischen ausgebildet ist, wobei einer der regelbaren Parameter (204) ein Drehmoment eines Motors zum Antrieb eines Mischers der Maschine (102) umfasst, wobei einer der Regelparameter (202) eine Drehzahl des Motors oder des Mischers umfasst, wobei einer der nicht regelbaren Parameter (206) eine Leistung des Motors umfasst, wobei die Ist-Korrelation zwischen der Drehzahl, dem Drehmoment und der Leistung bestimmt wird, oder dass die Maschine (102) zum Tablettenpressen ausgebildet ist, wobei einer der regelbaren Parameter (204) eine Leistung eines Motors zum Antrieb einer Tablettenpresseinrichtung der Maschine (102)umfasst, wobei einer der Regelparameter (202) eine Drehzahl des Motors umfasst, wobei einer der nicht regelbaren Parameter (206) eine Kraftaufnahme des Motors umfasst, wobei die Ist-Korrelation zwischen der Drehzahl, der Leistung und der Kraftaufnahme bestimmt wird, oder dass die Maschine (102) zum Kapselfüllen ausgebildet ist, wobei einer der regelbaren Parameter (204) eine Leistung eines Motors zum Antrieb einer Kapselfülleinrichtung der Maschine (102) umfasst, wobei einer der Regelparameter (202) eine Drehzahl des Motors der Kapselfülleinrichtung umfasst, wobei die Ist-Korrelation zwischen der Drehzahl und der Leistung bestimmt wird, oder dass die Maschine (102) zum Gefriertrocknen ausgebildet ist, wobei einer der regelbaren Parameter (204) eine Kühlleistung eines Kühlers der Maschine (102)umfasst, wobei einer der Regelparameter (202) eine Temperatur eines Produkts in der Maschine (102) umfasst, wobei einer der nicht regelbaren Parameter (206) einen Druckabfall über der Zeit in der Maschine (102) umfasst, wobei die Ist-Korrelation zwischen der Kühlleistung, der Temperatur und dem Druckabfall über der Zeit bestimmt wird, oder dass die Maschine (102) zum Verpacken ausgebildet ist, wobei einer der regelbaren Parameter (204) eine Temperatur in der Maschine (102) umfasst und wobei einer der Regelparameter (202) einen Stellwert wenigstens eines Motors zum Antrieb einer Verpackungseinrichtung der Maschine (102) umfasst, wobei die Ist-Korrelation zwischen der Temperatur und dem Stellwert des wenigstens einen Motors bestimmt wird.
